Europäisches Patentamt

European Patent Office

Office européen des brevets

(11) Veröffentlichungsnummer: **0 176 896**
A2

## EUROPÄISCHE PATENTANMELDUNG

(21) Anmeldenummer: 85111970.1

(22) Anmeldetag: 21.09.85

(51) Int. Cl.⁴: **C 08 L 71/04**
C 08 L 25/00, C 08 L 25/10

(30) Priorität: 24.09.84 DE 3434979

(43) Veröffentlichungstag der Anmeldung:
09.04.86 Patentblatt 86/15

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Hambrecht.Juergen,Dr.
Werderstrasse 30
D-6900 Heidelberg(DE)

(72) Erfinder: Gerberding, Karl, Dr.
In der Dreispitz 9
D-6706 Wachenheim(DE)

(72) Erfinder: Brandstetter, Franz,Dr.
Ritterbueschel 45
D-6730 Neustadt(DE)

(72) Erfinder: Echte, Adolf,Dr.
Leuschnerstrasse 42
D-6700 Ludwigshafen(DE)

(72) Erfinder: Swoboda, Johann, Dr.
Neuwiesenstrasse 28
D-6700 Ludwigshafen(DE)

(72) Erfinder: Boehlke, Klaus, Dr.
Gerhart-Haupmann Strasse 53
D-6717 Hessheim(DE)

(72) Erfinder: Gausepohl, Hermann, Dr.
Neuweg 10
D-6704 Mutterstadt(DE)

(72) Erfinder: Mueller,Wolfgang F, Dr.
Hahnenweg 20
D-6730 Neustadt(DE)

(54) Thermoplastische Formmassen.

(57) Thermoplastische Formmassen auf der Grundlage von Polyphenylenethern und Styrolpolymerisaten die Außerdem ein hydriertes, statistisch aufgebautes Copolymerisat aus mono-alkenyl-aromatischen Kohlenwasserstoffen und konjugierten Dienen enthalten.

EP 0 176 896 A2

Thermoplastische Formmassen

Die Erfindung betrifft neue thermoplastische Formmassen, die Polyphenylenether oder Gemische aus Polyphenylenether und Styrolpolymerisaten und zur Verbesserung der Schlagzähigkeit und des Verarbeitungsverhaltens statisch aufgebaute, hydrierte Copolymerisate enthalten.

Polyphenylenether-Harze sind dem Fachmann als eine Klasse von Thermoplasten bekannt, die eine Reihe von hervorragenden physikalischen Eigenschaften besitzen. Sie können durch oxidative und nicht-oxidative Verfahren hergestellt werden, wie dies beispielsweise in den US-PS 3 306 874, 3 306 875, 3 257 357 und 3 257 358 beschrieben worden ist. Es ist weiterhin bekannt, daß viele der Eigenschaften der Polyphenylenether, beispielsweise die Leichtigkeit der Verarbeitung, die Schlagfestigkeit und die Lösungsmittelbeständigkeit, verbessert werden können, indem man diese Harze mit anderen Harzen, wie z.B. mit Polystyrol, kombiniert. So sind z.B. thermoplastische Massen, die sich zur Herstellung von Formteilen eignen und die schlagzäh modifizierte Styrolpolymerisate und Polyphenylenether enthalten aus den US-PS 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend. Wünschenswert sind jedoch für spezielle Anwendungen eine verbesserte Schlagzähigkeit und beim Einsatz im Großspritzguß eine verbesserte Verarbeitbarkeit, insbesondere eine höhere Fließfähigkeit.

Zur Verbesserung der Schlagzähigkeit ist verschiedentlich vorgeschlagen worden, elastomere Blockmischpolymerisate zuzusetzen. Zum Stand der Technik nennen wir: (1) DE-AS 1 932 234, (2) DE-AS 2 000 118, (3) DE-OS 2 255 930, (4) DE-OS 2 750 515, (5) DE-OS 2 434 848, (6) DE-OS 3 038 551, (7) EP 80 666, (8) WO 83/01 254.

In (1) – (3) wird die Zugabe von unterschiedlich aufgebauten, vornehmlich aus vinylaromatischen und konjugierten Dienblöcken bestehenden Blockcopolymerisaten beschrieben. Diese Mischungen zeichnen sich durch eine verbesserte Schlagzähigkeit aus. Aufgrund der bei hohen Verarbeitungstemperaturen auftretenden Vernetzung dieser Blockcopolymerisate ist die Wirkung der zugesetzten Blockcopolymerisate nicht befriedigend. In der Folge ist deshalb in (4) – (8) vorgeschlagen worden, hydrierte Blockcopolymerisate oder deren Mischung mit der nicht hydrierten Vorstufe als Schlagzähmodifizierungsmittel einzusetzen. Im wesentlichen werden dabei hydrierte vG/P Block- oder Teleblockcopolymerisate, bestehend aus einem vinylaromatischen Kohlenwasserstoffblock und einem hydrierten Blockteil, das durch Polymerisation eines konjugierten Diens, wie z.B. Butadien oder Isopren erhalten wurde, eingesetzt. Die Schlagzähigkeit dieser Polymermischungen ist weiter verbessert. Gleichzeitig wird jedoch durch Zugabe der Blockcopolymerisate die Wärmeformbeständigkeit abgesenkt. Nicht befriedigend bleibt das Verarbeitungsverhalten der Mischungen insbesondere im Großspritzguß.

Aufgabe der vorliegenden Erfindung war es deshalb, thermoplastische Formmassen auf der Grundlage von Polyphenylenether oder Mischungen aus Polyphenylenethern und Styrolpolymerisaten zu schaffen, die zu Formteilen mit einer verbesserten Schlagzähigkeit bei gleichzeitig wenig veränderter hoher Wärmeformbeständigkeit verarbeitet werden können und deren Verarbeitungsverhalten wesentlich verbessert ist.

Diese Aufgabe wird erfindungsgemäß durch thermoplastische Formmassen auf der Grundlage von Polyphenylenether oder Gemischen aus Polyphenylenethern und Styrolpolymerisaten gelöst, die außerdem ein statisch aufgebautes hydriertes Copolymerisat enthalten, das aufgebaut ist aus:

5 - 80 Gewichtsteilen mindestens eines mono-alkenyl-aromatischen Kohlenwasserstoffs,
95 - 20 Gewichtsteilen mindestens eines copolymerisierbaren konjugierten Diens und ggf.
0 - 40 Gewichtsteilen mindestens eines copolymerisierbaren ethylenisch ungesättigten Monomeren aus der Gruppe der (Meth)acrylsäure, (Meth)acrylsäurealkylester mit 1 - 8 C-Atomen im Alkylrest, Acrylnitril und/oder Maleinsäureanhydrid, wobei die Gewichtsteile sich zu 100 Gewichtsteilen ergänzen.

Das statische aufgebaute hydrierte Copolymerisat kann ein lineares, verzweigtes oder sternförmiges Copolymerisat sein, das bevorzugt 10 - 70 Gewichtsteile Styrol, $\alpha$-Methylstyrol, o- oder p-Methylstyrol und/oder p-tert.-Butylstyrol, 90 - 30 Gewichtsteilen Butadien, Isopren und/oder Pentadien und 0 - 30 Gewichtsteile (Meth)acrylsäurealkylester mit 1 - 4 C-Atomen im Alkylrest und/oder Acrylnitril enthält und in dem mindestens 95 % aller ursprünglich vorhandenen monoolefinisch ungesättigten Doppelbindungen hydriert und keine der von den vinylaromatischen Monomeren herrührenden Doppelbindungen hydriert sind.

Besonders bevorzugt sind lineare, statistisch aufgebaute, hydrierte Copolymerisate mit 20 - 60 Gewichtsteilen Styrol und 80 - 40 Gew.-Teilen

## 0176896

Butadien und/oder Isopren, statistisch aufgebaute hydrierte Terpolymerisate mit 20 - 70 Gewichtsteilen Styrol, 80 - 30 Gewichtsteilen Butadien und/oder Isopren und 1 - 10 Gewichtsteile Butylacrylat, Methylmethacrylat und/oder Acrylnitril statistisch aufgebaute hydrierte Sterncopolymerisate mit drei, höchstens vier linearen Copolymerisatstellen, die über ein Zentrum X miteinander gekoppelt sind und in dem X durch Kupplung über $SiCl_4$, Polyhalogeniden oder Diestern gebildet wird und die als Monomersysteme, 20 - 70 Gewichtsteile Styrol und/oder p-Methylstyrol, 80 - 30 Gewichtsteilen Butadien und/oder Isopren und 0 - 10 Gewichtsteile (Meth)acrylsäurealkylester mit $C_1$-$C_4$-Alkylgruppen Acrylnitril, (Meth)acrylsäure und/oder Maleinsäureanhydrid enthalten, wobei in allen der genannten Copolymerisate sich die Gewichtsteile auf 100 Gewichtsteile ergänzen.

Darüber hinaus kann die bevorzugte Formmasse auch noch Hilfs- und Zusatzstoffe wie feuerhemmende Mittel aus der Gruppe der aromatischen Phosphate und Phosphinoxide, Verstärkungsmittel wie Glasfasern, organische und mineralische Füllstoffe sowie Stabilisatoren, Verarbeitungshilfsmittel, Farbstoffe und die sonst bisher für die Formmassen bekannt gewordenen Zusatzstoffe sowie weitere mit dem Matrixpolymerengemisch verträgliche Polymere wie SMSA-Copolymerisate, SAN-Copolymerisate, Styrol-(Meth)acrylsäure-Copolymerisate, Styrol-(Meth)acrylsäurealkylester-Copolymerisate mit $C_1$ bis $C_4$-Alkylresten, Polyetherimide, Polyacrylate, Polyamide und alle anderen bisher mit Polyphenylenether als mischbar bekannt gewordenen Polymerisate enthalten.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die thermoplastischen Formmassen können entweder Polyphenylenether oder Gemische aus Polyphenylenether und glasklaren oder schlagfest modifizierte Styrolpolymersaten, die die konjugierten in beliebigen Mengen, enthalten beispielsweise in Mengen von 5 bis 75 Gew.-% Styrolpolymerisat und 95 bis 25 Gew.-% Polyphenylenether enthalten. Für die Herstellung von Formteilen eignen sich insbesondere solche Formmassen, die 10 bis 70 Gew.% schlagfest modifizierte Styrolpolymerisate und 90 bis 30 Gew.-% Polyphenylenether enthalten. Zusätzlich enthalten die erfindungsgemäßen Formmassen 5 bis 40, vorzugsweise 10 bis 30 Gewichtsteile bezogen auf 100 Gewichtsteile der Mischung eines statistisch aufgebauten, hydrierten Copolymerisates.

**0176896**

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein  -ständiges tert. Wasserstoffatom besitzen, Halogenkohlenwasserstoffe, Phenylreste und Kohlenwasserstoff-oxid-Reste tragen. So kommen in Frage: Poly(2,6-dichlor-1,4-phenylen)ether, Poly(2,6-diphenyl-1,4-phenylen)ether, Poly(2,6--di-methoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Ganz besonders bevorzugt werden Poly(2,6-dimethyl-1,4-phenylen)ether mit einer Grenzviskosität zwischen 0,40 und 0,66 dl/g (gemessen in Chloroform bei $30^{\circ}$C).

Die aromatischen Polyphenylenether können durch Selbstkondensation der entsprechend einwertigen Phenole durch Einwirken von Sauerstoff in Gegenwart eines Katalysatorsystems, wie es beispielsweise in den US-PS 3 219 625, 3 306 875, 3 956 442, 3 965 069, 3 972 851 beschrieben ist, hergestellt werden.

Als Styrolpolymerisate, die in der erfindungsgemäßen Formmasse gegebenenfalls enthalten sind, werden sowohl Styrolhomopolymerisate als auch schlagzäh modifizierte Styrolpolymerisate eingesetzt.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Die Homopolymerisate werden dabei nach den bekannten Verfahren, in Masse Lösung oder Suspension hergestellt (vgl. Ullmann's Encyklopädie der technischen Chemie, Bd. 19, S. 265, Verlag Chemie, Weinheim 1980). Die Homopolymerisate können mittlere Molekulargewichte ($M_n$) von 1000 - 200 000 aufweisen.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschreiben sind. Selbstverständlich sind auch andere Verfahren anwendbar, sofern die gewünschte Teilchengröße der Kautschukphase eingestellt wird.

**0176896**

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk, z.B. Polybutadien, Polyisopren und Mischpolymerisate des Butadiens und/oder Isoprens mit Styrol und anderen Comonomeren, die eine Glastemperatur unter $-20^{o}$C besitzen. Besonders eignen sich Butadien-Polymerisate mit einem 1,4-cis-Gehalt, der zwischen 25 und 99 liegt. Es können aber auch Acrylatkautschuke, EPDM-, Polybutylen- und Polyoctenamerkautschuke eingesetzt werden.

Die schlagzäh modifizierten Styrolpolymerisate besitzen einen Weichkomponentenanteil von 20 - 60 Gew.-%, vorzugsweise von 22 - 45 Gew.%. Die Teilchengröße der Weichkomponente sollte im Bereich von 0,2 bis 6 µm liegen. Besonders geeignet sind schlagzäh modifizierte Polymerisate, in denen die mittlere Teilchengröße im Bereich von 0,6 bis 4 µm liegt und in denen 99 bis 85 Gew.-% der Teilchen einen Teilchendurchmesser von 0,3 bis 0,9 µm und 1 bis 20 Gew.-% der Teilchen einen Durchmesser von 3 bis 7 µm haben.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Die Herstellung der in den Formmassen enthaltenen schlagzäh modifizierten Styrolpolymerisate kann wie oben gezeigt nach beliebigen Verfahren erfolgen, sofern dafür gesorgt ist, daß die oben genannten Teilchengrößenverteilungen eintreten. Man kann aber auch schlagzäh modifizierte Styrolpolymerisate, deren Weichkomponenten unterschiedliche Teilchengrößen haben, miteinander mischen. Die in den erfindungsgemäßen Formmassen enthaltenen Styrolpolymerisate können beispielsweise durch Mischen von Polymerisaten mit einer bestimmten Teilchengröße mit solchen Polymerisaten mit anderen Teilchengrößen erhalten werden. So kann man beispielsweise 90 Gew.-Tln eines Polymerisates mit einer mittleren Teilchengröße von 0,4 µm und 10 Gew.-Tln eines Polymerisates mit einer mittleren Teilchengröße von 6 µm verwenden.

Erfindungswesentlich sind die linear, verzweigt oder sternförmig aufgebauten, hydrierten Copolymerisate, in denen die Comonomeren in statistischer Verteilung eingebaut sind und die als Monomerbausteien

1) 50 - 80 Gewichtsteile mindestens eines mono-alkenyl-aromatischen Kohlenwasserstoffs

2) 95 - 20 Gewichtsteile mindestens eines copolymerisierbaren konjugierten Diens und ggf.

3) 0 - 40 Gewichtsteile mindestens eines copolymerisierbaren ethylenisch ungesättigten Monomeren aus der Gruppe der (Meth)acrylsäure, (Meth)-acrylsäurealkylester mit 1 - 8 C-Atomen in Alkylrest, Acrylnitril und/oder Maleinsäueanhydrid enthalten. Die Gewichtsteile ergänzen sich zu 100.

Als monovinylaromatische Kohlenwasserstoffe kommen in Betracht: Styrol sowie Seitenketten-alkylierte und kernalkylierte Styrole wie o- und p-Methylstyrol, Ethylvinylbenzol, tert.-Butylstyrol und -Methylstyrol. Die monovinylaromatischer Verbindungen können allein oder in Mischung miteinander eingesetzt werden, vorzugsweise werden aber Styrol, -Methylstyrol und p-Methylstyrol allein verwendet. Der Gewichtsanteil der monovinylaromatischen Verbindung beträgt 5 - 80, vorzugsweise 10 - 70 und ganz besonders bevorzugt 20 - 60.

Konjugierte Diene, die für die erfindungsgemäßen hydrierten, statistischen Copolymerisate insbesondere in Betracht kommen, sind beispielsweise Butadien-1,3 sowie Isopren und Pentadien. Diese Diene werden entweder allein oder in Mischung miteinander für die Herstellung der statistischen Copolymerisate herangezogen. Der Dien-Gehalt in den (Co)-Polymerketten oder im sternförmig aufgebauten Copolymerisat kann 95 bis 20 Gewichtsteile, insbesondere 90 bis 30 Gewichtsteile und ganz besonders bevorzugt 80 bis 40 Gewichtsteile betragen.

Gegebenenfalls können in den erfindungsgemäßen statisch aufgebauten, hydrierten Copolymerisaten auch noch bis zu 40 Gewichtsteile, vorzugsweise bis zu 10 Gewichtsteile mindestens eines copolymerisierbaren ethylenisch ungesättigten Monomeren wie Methacrylsäure, Acrylsäure, (Meth)-acrylsäurealkylester mit 1 - 8 C-Atomen im Alkylrest wie Methacrylat, Ethylacrylat, Butylacrylat, Hydroxyethylacrylat, Methylmethacrylat sowie Acylnitril und/oder Maleinsäureanhydrid enthalten sein. Diese Monomeren können entweder allein oder in Mischung miteinander für die Herstellung der hydrierten statistischen Copolymerisate verwendet werden.

0176896

Die Herstellung der erfindungsgemäßen statisch aufgebauten hydrierten Copolymerisate erfolgt nach bekannten Methoden der ionischen oder radikalischen Polymerisation nach Lösungs-, Emulsions- oder Suspensionsverfahren. Sie sind z.B. in folgenden Patentschriften beschrieben: US-PS 2 798 853, DE-PS 1 811 516, DE-OS 2 931 73, DE-OS 3 106 959. Durch Emulsionspolymerisation hergestellte statistisch aufgebaute Co- oder Terpolymerisate können nach der in D.C. Backley, Emulsion Polymerisation, Allied Science Publ. Ltd., London (1975), S. 418 ff. und den in Houben-Weyl, Thieme Verlag, Stuttgart, Bd. 14/1 (1961) S. 674 ff. hergestellt und analog obengenannten Patentschriften hydriert werden.

So ist z.B. eine bevorzugte Methode zur Herstellung und Hydrierung statistischer Copolymerer in den Patentschriften DOS 3 106 959, US 2 798 853 und DE-PS 1 811 516 beschrieben.

Um Copolymerisate aus Styrol und Butadien in der gewünschten monomeren Zusammensetzung zu erhalten, werden zweckmäßig Mischungen aus Styrol und Butadien in Lösungsmitteln gelöst und mit Lithiumalkylkatalysatoren in Gegenwart geeigneter Basen als Randomizer polymerisiert, wobei die Mischungen den Anteil an Monomeren enthalten, der im Copolymerisat einpolymerisiert sein soll. Als Lösungsmittel für die Polymerisation eignen sich zweckmäßig geradkettige und verzweigte aliphatische Kohlenwasserstoffe wie z.B. n-Pentan, n-Octan, n-Dekan, Isopentan, Isooctan, 2,3-Dimethylbutan, sowie einfache oder substituierte cycloaliphatische und aromatische Kohlenwasserstoffe wie z.B. Cyclopentan, Cyclohexan, Methylcyclohexan, Dekanin, Benzol, Toluol, Ethylbenzol, Cumol, Mesitylen, Tetralin sowie jede beliebige Mischung der aliphatischen, cycloaliphatischen und aromatischen Kohlenwasserstoffe. Vorteilhaft eignet sich als Lösungsmittel Cyclohexan.

Die Monomerenkonzentration im Lösungsmittel liegt vorteilhaft zwischen 20 und 26 %. Es ist zweckmäßig, die Copolymerisation so zu führen, daß die erhaltenen, nicht hydrierten Copolymerisate ein Molekulargewicht haben, das im Bereich zwischen 40.000 und 140.000 liegt. Das Molekulargewicht wird mittels Gelpermeationschromatographie bestimmt und als sogenanntes "Peakmolekulargewicht" angegeben (Eichstandards: eng verteiltes Polystyrol, Temperatur 23°C, Lösungsmittel Tetrahydrofuren). Um diesen Molekulargewichtsbereich zu erhalten, verwendet man zweckmäßig Lithiumalkylkatalysatoren in Mengen von 0,7 bis 8 Mol/100 kg, bezogen auf das Monomerengemisch.

**0176896**

Als Initiatoren für die Polymerisation eignen sich von den Lithiumalkylen insbesondere Methyllithium, Ethyllithium, n-, sek.-, tert.-Butyllithium, Isopropyllithium, vorzugsweise wird n- oder sek.-Butyllithium eingesetzt.

Der Randomizer wird in Mengen von 0,01 bis 2 Gew.-%, bezogen auf Gesamtlösungsmittel, eingesetzt. Als Randomizer kommen alle literaturbekannten Basen in Frage wie z.B. Anisol, Dimethylglykol, Tetramethylethylendiamin und Tetrahydrofuran, um nur einige zu nennen. Bevorzugt ist Tetrahydrofuran.

Lineare statistische Copolymerisate erhält man in bekannter Weise durch Abbruch der "lebenden" Lösung mit protonenaktiven Stoffen.

Verzweigte statistische Copolymerisate lassen sich nach der Lehre der DOS 2 931 736 in besonders guten Ausbeuten herstellen. Hierzu werden die "lebenden" Anionen mit geeigneten Kupplungsmitteln wie beispielsweise Polyepoxiden, wie epoxidiertes Leinsamenöl, Polyisocyanaten, beispielsweise Benzo-1,2,4-triisocyanat, Polyketonen, Polyanhydriden, wie beispielsweise das Dianhydrid der Pyromellithsäure, oder Polyhalogeniden gekoppelt. Ebenso können auch Dicarbonsäureester, z.B. Diäthyladipat oder ähnliche, als Kupplungsmittel verwendet werden. Eine weitere bevorzugte Gruppe von Kupplungsmitteln sind die Siliciumhalogenide, insbesondere Siliciumtetrachlorid, Siliciumtetrabromid, Trichloräthylsilan oder 1,2-Bis(methyldichlorsilyl)-ethan. Weiterhin können als Kupplungsmittel auch Polyvinylaromaten, insbesondere Divinylbenzol eingesetzt werden, wie es beispielsweise in der US-PS 3 280 084 beschrieben ist. In diesem Fall addieren sich einige Divinylbenzol-Einheiten unter Vernetzung zu einem Verzweigungszentrum, über das die vorgeformten Polymerisatblöcke miteinander verbunden werden.

Vorzugsweise wird ein tri- oder tetrafunktionelles Kupplungsmittel der genannten Art oder Divinylbenzol eingesetzt. Das polyfunktionelle Kupplungsmittel wird dabei der Reaktionslösung im allgemeinen in Mengen zugegeben, die äquivalent sind zu der Gesamtmenge der lebenden Polymerblöcke, d.h. zur Anzahl der aktiven Lithium-Kohlenstoff-Bindungen in den zuvor gebildeten linearen Copolymerisatblöcken. Die Umsetzung der aktiven linearen Copolymerisate mit dem Kupplungsmittel erfolgt dabei vorzugsweise unter den gleichen Reaktionsbedingungen wie die vorangegangene Polymerisation der Monomeren.

Das Hydrieren des Butadienteils des Copolymerisates erfolgt nach bekannten Verfahren. Dabei ist darauf zu achten, daß überwiegend die vom Butadien herrührenden Doppelbindungen hydriert werden und ein Hydrieren der

0176896

aromatischen Systeme vermieden wird. Das Hydrieren kann beispielsweise durch Umsetzen der Polymerisate mit Wasserstoff bei Drücken zwischen 5 und 30 bar, insbesondere 10 bis 20 bar und Temperaturen im Bereich von 50 bis $200^{o}$C, insbesondere 70 bis $150^{o}$C, in Gegenwart von Übergangsmetallkatalysatoren erfolgen. Dabei ist es erforderlich, mindestens 95 %, insbesondere 97 %, der olefinischen Doppelbindungen zu hydrieren. Als Katalysator eignen sich z.B. homogene Ni/Al-Katalysatorsysteme, hergestellt aus Ni-II-octoat bzw. -acetylacetonat, Bis(2,4-pentadienato)nickel und Al-triethyl bzw. -triisobutyl. Man verwendet zweckmäßig den Katalysator in Mengen von 0,3 Mol/kg bis 7,0 Mol/kg, bezogen auf Ni und das Gewicht des zu hydrierenden Polymeren.

Die Aufarbeitung der hydrierten statistischen Copolymeren erfolgt in bekannter Weise durch Entfernen des Lösungsmittels mittels Dampfstrippen oder mittels Extruderentgasung. Die Aufarbeitung kann auch zusammen mit den anderen Komponenten der erfindungsgemäßen Formmassen erfolgen.

Die Mischungen aus Polyphenylenether und den hydrierten Copolymerisaten, die gegebenenfalls auch Styrolpolymerisate enthalten können, können darüber hinaus auch noch Hilfs- und Zusatzstoffe wie feuerhemmende Mittel aus der Gruppe der aromatischen Phosphate und Phosphinoxide, Verstärkungsmittel wie Glasfasern, organische und mineralische Füllstoffe sowie Stabilisatoren, Verarbeitungshilfsmittel, Farbstoffe und die sonst bisher für die Formmassen bekannt gewordenen Zusatzstoffe sowie weitere mit dem Matrixpolymerengemisch mischbare Polymere wie SMSA-Copolymerisate, SAN-Copolymerisate, Styrol-(Meth)acrylsäure-Copolymerisate, Styrol-(Meth)-acrylsäurealkylester-Copolymerisate mit $C_1$-$C_4$-Alkylresten, Polyetherimide, Polyacrylate und alle anderen bisher mit Polyphenylenether als mischbar bekannt gewordenen Polymerisate enthalten.

Die erfindungsgemäßen Formmassen besitzen neben einer hohen Wärmeformbeständigkeit und guten mechanischen Eigenschaften, insbesondere guten Kerbschlagzähigkeiten und Bruchenergien, eine ausgezeichnete Fließfähigkeit und vorzügliche Verarbeitbarkeit auch im Großspritzguß.

Die folgenden Beispiele dienen dazu, die Erfindung zu beschreiben, ohne daß damit eine Begrenzung der Erfindung beabsichtigt ist. Die angegebenen Teile sind Gewichtsteile, es sei denn, es ist anders angegeben.

### Beispiele und Vergleichsbeispiele

Komponente a)

Es wurde ein Poly(2,6-dimethyl-1,4-phenylen)ether mit einer Grenzviskosität von 0,60 dl/g (gemessen in Chloroform bei 30°C) und einem Rest-Kupfer-Gehalt von 4 ppm bezogen auf das Polymerisat eingesetzt. Der Polyphenylenether war gemäß den Beispielen der DE-OS 30 35 599 und EP 81708 hergestellt worden.

Komponente b)

Folgende Styrolpolymerisate wurden eingesetzt:

B1: Ein Polystyrol mit einem Molekulargewicht von 140 000 (viskosimetrische Messung in Benzol bei 25°C), hergestellt gemäß S.R. Sandler, U. Karo. Polymer Synthesis Org. Chem. Vol. 29/I, Academic Press, New York, 1974, S. 3.

B2: Ein schlagfestes Polystyrol mit einer mittleren Teilchengröße (Gewichtsmittel) von 0,5 µm und einem Polybutadienanteil von 9 Gew.%, hergestellt gemäß DE-OS 30 35 648.

B3: Ein schlagfestes Polystyrol mit einer mittleren Teilchengröße (Gewichtsmittel) von 6,4 µm und einem Polybutadienanteil von 8 Gew.%, hergestellt gemäß DE-OS 38 35 648.

Komponente c)

Folgende hydrierten Block- und Copolymerisate werden eingesetzt:

C1: Ein ABA-Blockcopolymerisat mit scharf getrennten A-Blöcken, bestehend aus Polystyrol von zusammen 30 Gew.% und einem hydrierten Polybutadienblock B mit einem Gewichtsanteil von 70 %. Der Blockkautschuk hatte eine Glastemperatur von -48°C (nach K.H. Illers und H. Breuer, Kolloid-Zeitschrift 176 (1961), S. 110) und ein Molekulargewicht von 70000.

C2: Ein statistisch aufgebautes, lineares hydriertes Styrol-Butadien-Copolymerisat mit einem Styrolanteil von 30 Gew.%, hergestellt gemäß DE-OS 31 06 954 und DE-PS 18 11 516. Das Copolymerisat hatte eine Glastemperatur von -49°C und ein Molekulargewicht von 95000.

C3: Ein statistisch aufgebautes, sternförmiges hydriertes Styrol-Butadien-Copolymerisat mit einem Styrolanteil von 30 Gew.%, hergestellt gemäß der DE-OS 29 31 736. Das Sterncopolymerisat hatte eine Glastemperatur von -56°C und ein Molekulargewicht von 120000.

Zusatzstoffe d)

Folgende Zusatzstoffe wurden verwendet

D1: Triphenylphosphat

D2: Ethylen-Buten-1-Copolymerisat mit einem Buten-1-Anteil von 8 Gew.%, einer Dichte von 0,919 $(g/cm^3)$ und einem Molindex bei 190°C und 21,6 Kp von 1(g/10min)

D3: Styrol-Maleinsäureanhydrid-Copolymerisat mit einem MSA-Anteil von 9 Gew.% und einer Viskositätszahl von 70 (dl/g) (gemessen 0,5 % in DMF bei 20°C)

D4: Titandioxid mit einer mittleren Teilchengröße von 0,5 µm

D5: Trisnonylphenylphosphit

Herstellung der Formmassen

Die in der Tabelle aufgegebenen Gewichtsteile der Komponenten a, b, c und der Zusatzstoffe d) wurden in einem Fluidmischer vorgemischt und auf einem Zweiwellenextruder bei 280°C aufgeschmolzen, homogenisiert, gemischt und granuliert.

Prüfung der Formmassen

Aus den granulierten Mischungen wurden mittels einer Spritzgußmaschine bei 280°C Prüfkörper hergestellt. Geprüft wurden die Bruchenergie nach DIN 53 443, Blatt 1 bei 23°C und die Kerbschlagzähigkeit nach DIN 53 433 bei 23°C.

Die Fließfähigkeit wurde anhand des Schmelzindexes nach DIN 53 735 ermittelt und die Wärmeformbeständigkeit gemäß DIN 53 460/B bestimmt.

Das Verarbeitungsverhalten im Spritzguß wurde auf einer Einschneckenmaschine Fabrikat IDRA, Typ MP 120 S-4200 (Zuhaltekraft 12000 KN Ein-

BASF Aktiengesellschaft — 12 — O.Z. 0050/37365

**0176896**

spritzvolumen 3200 cm$^3$ eff.) überprüft. Als Spritzling wurde eine Rückwand eines Fernsehers mit folgenden technischen Daten verwendet:

- mittleres Gewicht des Spritzlings 1,800 kg
- Abmessungen des Spritzlings (außen)
  Länge/Breite/Höhe: (mm) 750/490/150
- maximaler Fließweg FW / mittlere Wanddicke WD: (mm) 411/3
- FW/WD-Verhältnis: 137:1
- Angußart und Abmessungen:
  Kegel: (mm) 7,5/10,5; Länge: 90

Die Versuche wurden unter Verwendung der folgenden Maschineneinstelldaten durchgeführt:

- Temperaturführung im Plastifizierzylinder ($^o$C)
  wahlweise für die einzelnen
  Schüsse  —  230/230/240/240/240
           —  230/240/240/250/265
           —  250/250/260/270/280
           —  260/260/260/270/290

- Temperatur der Einzugszone 60$^o$C
- Temperatur im Werkzeug ($^o$C)

  | | |
  |---|---|
  | Gesenkboden | 85 |
  | Gesenkmantel | 85 |
  | Kern | 70 |
  | Auswerferstempel | 60 |

- Staudruck (bar)              0 (offene Düse)
  Einspritzzeit (sec)          3
- Nachdruckzeit (sec)          1,2
- Abkühlzeit (sec)             38
- Pausenzeit (sec)             0
- Gesamtzykluszeit (sec)       60
- Schneckendrehzahl (min$^{-1}$) 36

Das Verarbeitungsverhalten wurde über den Schmelzindex und die Verarbeitungsbreite beurteilt. Unter Verarbeitungsbreite ist der Druckbereich zu verstehen, in dem die Formteile keine Beanstandungen aufweisen. Der Bereich wird bei tiefem Spritzdruck durch den optimalen Spritzdruck begrenzt, d.h. die Formteile weisen keine Einfallstellen mehr auf. Die obere Grenze ergibt sich aus dem Spritzdruck, bei dem die Formteile gerade noch entformt werden können. Oberhalb dieser Grenze wird die Form überfüllt. Je größer dieser Bereich ist, umso besser, d.h. mit umso ge-

**0176896**

ringeren Schwierigkeiten läßt sich ein Polymerisat verarbeiten. Eine hohe Verarbeitungsbreite ist erwünscht, um z.B. bei Druckschwankungen oder Schwankungen der Materialeigenschaften die Ausfallrate an Spritzgußformlingen möglichst niedrig halten zu können. Die Tabelle enthält deshalb die Verarbeitungstemperaturen in $^{o}$C, sowie den zu diesen Verarbeitungstemperaturen ermittelte optimale Spritzdruck in bar. Im Anschluß daran folgt eine Spalte, in der die Verarbeitungsbreite den jeweiligen Verarbeitungstemperaturen und dem ermittelten optimalen Spritzdruck zugeordnet ist. Die Tabelle schließt ab mit einer Spalte, in der Bemerkungen z.B. über eventuelle Schäden (Angußreißer = Risse am Anguß; Schieferbruch = schiefriger Bruch im Angußbereich) an den erhaltenen Spritzgußformteilen enthalten sind.

Die Ergebnisse der Tabelle verdeutlichen, daß die erfindungsgemäßen Formmassen ein wesentlich verbessertes Verarbeitungsverhalten, insbesondere eine fehlerfreie Verarbeitung in einem breiten Verarbeitungsbereich aufweisen. Vergleiche hierzu insbesondere die Ergebnisse der Versuche 1, 2 und 7 mit den Vergleichsversuchen A, B.

| Beispiel | Zusammensetzung der Mischung Komponenten | | | | Vicat-Temperatur ($°C$) | Kerbschlag-zähigkeit ($KJ/m^2$) | Bruchenergie (Nm) (Variationskoeffizient (%)) |
| --- | --- | --- | --- | --- | --- | --- | --- |
| | a) (Gew.%) | b) (Gew.%) | c) (Gew.%) | d)(Gew.%) | | | |
| 1 | 42 | $B_2$ (41) $B_3$ (4) | $C_2$(10) | $D_2$ (1) $D_5$ (2) | 130 | 18 | 41 (10) |
| 2 | 42 | $B_2$ (41) $B_3$ (4) | $C_3$(10) | $D_2$ (1) $D_5$ (2) | 131 | 19 | 47 (7) |
| 3 | 58 | $B_1$ (22) | $C_2$ (17) | $D_2$ (1) $D_5$ (2) | 152 | 20 | 51 (4) |
| 4 | 45 | $B_2$ (32) $B_3$ (3) | $C_2$ (12) | $D_2$ (1) $D_3$ (5) $D_5$ (2) | 136 | 18 | 39 (11) |
| 5 | 40 | $B_2$ (32) $B_3$ (3) | $C_2$ (15) | $D_2$ (1) $D_4$ (7) $D_5$ (2) | 128 | 21 | 43 (12) |
| 6 | 50 | $B_2$ (27) $B_3$ (3) | $C_2$(10) | $D_1$ (7) $D_2$ (1) $D_5$ (2) | 123 | 21 | 34 (10) |
| 7 | 60 | - | $C_2$ (25) | $D_1$ (7) $D_2$ (1) $D_4$ (5) $D_5$ (2) | 136 | 27 | 37 (14) |

Tabelle: Fortsetzung

| Vergleichs-beispiele (nicht er-findungs-gemäß) | Zusammensetzung der Mischung Komponenten | | | | Vicat-Temperatur (°C) | Kerbschlag-zähigkeit (KJ/m²) | Bruchenergie (Nm) Variations-koeffizient (%) |
|---|---|---|---|---|---|---|---|
| | a) (Gew.%) | b) (Gew.%) | c) (Gew.%) | d)(Gew.%) | | | |
| A | 42 | $B_2(41)$ $B_3(4)$ | $C_1(10)$ | $D_2(1)$ $D_5(2)$ | 128 | 18 | 28 (24) |
| B | 60 | – | $C_1(25)$ $D_2(1)$ | $D_1(7)$ $D_4(5)$ $D_5(2)$ | 133 | 24 | 30 (33) |

BASF Aktiengesellschaft

O.Z. 0050/37365

Tabelle: Fortsetzung

| Beispiel | Meltindex 21,6 kp 250°C (g/10') | Spritz- temperatur (°C) | Spritzdruck [bar] | Verarbeitungs- breite | Bemerkungen |
|---|---|---|---|---|---|
| 1 | 57 | 290 | 1020 | 90 | keine |
|   |    | 300 | 930 | 100 |  |
| 2 | 54 | 290 | 1030 | 100 | keine |
|   |    | 300 | 950 | 120 |  |
| 3 | 9 | 310 | 1120 | 85 | keine |
|   |   | 320 | 1050 | 90 |  |
| 4 | 38 | 290 | 1090 | 90 | keine |
|   |    | 300 | 1000 | 100 |  |
| 5 | 70 | 280 | 1130 | 110 | keine |
|   |    | 290 | 1010 | 130 |  |
| 6 | 94 | 270 | 1210 | 120 | keine |
|   |    | 280 | 1080 | 120 |  |
| 7 | 57 | 290 | 1100 | 90 | keine |
|   |    | 300 | 980 | 90 |  |
| Vergleichs- beispiele (nicht er- findungs- gemäß |  |  |  |  |  |
| A | 28 | 290 | 1250 | 50 | Angußreißer |
|   |    | 300 | 1100 | 45 | Schieferbruch |
| B | 21 | 290 | 1230 | 15 | Schieferbruch |
|   |    | 300 | 1070 | 15 |  |

BASF Aktiengesellschaft

- 16 -

O.Z. 0050/37365

0176896

## Patentansprüche

1. Thermoplastische Formmassen auf der Grundlage von Polyphenylenether oder Gemischen aus Polyphenylenethern und Styrolpolymerisaten, dadurch gekennzeichnet, daß sie außerdem ein hydriertes, statistisch aufgebautes, lineares oder sternförmiges Copolymerisat enthalten, das aufgebaut ist aus 5 - 80 Gew.-Teilen mindestens eines mono-alkenyl-aromatischen Kohlenwasserstoffs, 95 - 20 Gew.-Teilen mindestens eines copolymerisierbaren konjugierten Diens, und ggf. 0 - 40 Gew.-Teilen mindestens eines copolymerisierbaren ethylenisch ungesättigten Monomeren, ausgewählt aus der Gruppe (Meth)acrylsäure, (Meth)acrylsäurealkylester mit 1 - 8 C-Atomen im Alkylrest, Acrylnitril und/oder Maleinsäureanhydrid, wobei die Gewichtsteile sich zu 100 Gewichtsteile ergänzen.

2. Thermoplastische Formmassen gemäß Anspruch 1, dadurch gekennzeichnet, daß der Polyphenylenether ein in ortho-Position disubstituiertes Polyphenylenoxid ist von dem der Ethersauerstoff einer Einheit mit dem Benzolkern der benachbarten Einheit verbunden sind und wobei mindestens 50 Einheiten verbunden sind.

3. Thermoplastische Formmassen gemäß Anspruch 1, dadurch gekennzeichnet, daß sie ein statistisch aufgebautes, hydriertes Copolymerisat enthalten, das aus 10 - 70 Gewichtsteile Styrol, - Methylstyrol, o- oder p-Methylstyrol und/oder p-tert.-Butylstyrol, 90 - 30 Gewichtsteile Butadien, Isopren und/oder Pentadien und 0 - 30 Gewichtsteile (Meth)acrylsäurealkylester mit $C_1-C_4$-Alkylresten und/oder Acrylnitril besteht, wobei sich die Gewichtsteile auf 100 Gewichtsteile ergänzen.

4. Thermoplastische Formmassen gemäß Anspruch 1, dadurch gekennzeichnet, daß mindestens 95 % aller ursprünglich vorhandenen monoolefinisch ungesättigten Doppelbindungen im statistischen Copolymerisat hydriert sind.

5. Thermoplastische Formmassen gemäß Anspruch 1, dadurch gekennzeichnet, daß im Copolymerisat (C) praktisch alle monoolefinisch ungesättigten Doppelbindungen und praktisch keine, der von den vinylaromatischen Monomeren herrührenden Doppelbindungen hydriert sind.

6.  Thermoplastische Formmassen gemäß Anspruch 1, <u>dadurch gekennzeichnet</u>, daß das statistische Copolymerisat ein hydriertes, sternförmig aufgebautes Polymerisat mit einem Zentrum X darstellt, von dem aus sich drei oder höchstens vier lineare Copolymerisatketten, in die die Comonomeren in statistischer Verteilung eingebaut sind, nach außen erstrecken und das als Monomerenbausteine 10 - 70 Gew.-% Styrol und/ oder p-Methylstyrol, 90 - 30 Gew.% Butadien und/oder Isopren und 0 - 10 Gew.-% (Meth)acrylsäure, Maleinsäureanhydrid enthält und das Zentrum X durch Kupplung mit $SiCl_4$, Polyhalogeniden oder Diestern gebildet wird.

7.  Thermoplastische Formmassen gemäß Anspruch 1, <u>dadurch gekennzeichnet</u>, daß als Styrolpolymerisate Styrolhomopolymerisate oder schlagzähmodifizierte Styrolpolymerisate eingesetzt werden.

8.  Thermoplastische Formmassen gemäß Anspruch 1, <u>dadurch gekennzeichnet</u>, daß das schlagfeste Styrolpolymerisat 20 - 60 Gew.-% Weichkomponente enthält und daß 98 - 50 Gew.-% dieser Weichkomponente eine mittlere Teilchengröße im Bereich 0,2 - 1 /um und 2 - 50 Gew.-% eine mittlere Teilchengröße von > 3 /um aufweist.

9.  Thermoplastische Formmassen gemäß Anspruch 1, <u>dadurch gekennzeichnet</u>, daß zusätzlich weitere mit dem Matrixpolymeren mischbare Polymere enthalten sind.

10. Thermoplastische Formmassen gemäß Anspruch 1, <u>dadurch gekennzeichnet</u>, daß als weitere mit dem Matrixpolymeren verträgliche Polymere, Styrol--Maleinsäureanhydridcopolymere, Styrol-Acrylnitril-Copolymere, Styrol--Alkyl(meth)acrylat-Copolymeren mit $C_1$-$C_4$-Alkylresten, Styrol-(Meth)-acrylsäure-Copolymerisate, Polyetherimidpolymerisate, Polyamide oder Polyacrylate enthalten sind.

11. Thermoplastische Formmassen gemäß Ansprüche 1 - 7, <u>dadurch gekennzeichnet</u>, daß zusätzlich feuerhemmende Mittel ausgewählt aus der Gruppe der aromatischen Phosphate und Phosphinoxide enthalten sind.

12. Thermoplastische selbstverlöschende Formmassen gemäß Ansprüchen 1 bis 7, <u>dadurch gekennzeichnet</u>, daß zusätzlich eine verstärkende Menge eines Glasfaserverstärkungsfüllstoffes enthalten ist.

13. Thermoplastische Formmasse gemäß Ansprüche 1 - 7, <u>dadurch gekennzeichnet</u>, daß zusätzlich mineralische Füllstoffe enthalten sind.